# EUROPÄISCHE PATENTSCHRIFT

(11) **EP 0 446 688 B1**
(45) Veröffentlichungstag und Bekanntmachung des Hinweises auf die Patenterteilung: **15.09.1993**
(21) Anmeldenummer: 91102636.7
(22) Anmeldetag: 22.02.1991
(51) Int. Cl.: E02B 15/04, B01D 33/073, B01D 33/11, B01D 33/46

(54) **Verfahren und Vorrichtung zum Entfernen von Öl von Wasseroberfächen**
Method and device for removing oil from watersurface
Procédé et dispositif pour enlever l'huile de la surface de l'eau

(30) Priorität: 13.03.1990 DE 4007995
(43) Veröffentlichungstag der Anmeldung: 18.09.1991
(73) Patentinhaber: PASSAVANT-WERKE AG, 65322 Aarbergen 7 (DE)
(72) Erfinder: Bach, Volker, W-6209 Aarbergen 1 (DE); Konradi, Oskar, W-6209 Aarbergen 1 (DE)
(74) Vertreter: Glawe, Delfs, Moll & Partner

(56) Entgegenhaltungen:
- EP-A- 0 125 474
- EP-A- 0 268 551
- WO-A-82/00671
- CH-A- 484 329
- DE-A- 3 438 336
- US-A- 2 294 179
- US-A- 4 187 187

## Beschreibung

Die Erfindung betrifft ein Verfahren zum Entfernen von Öl von der Oberfläche eines Gewässers durch Aufbringen eines schwimmfähigen ölaufsaugenden Granulats auf die Wasseroberfläche und Entfernen des ölbeladenen Granulats von der Wasseroberfläche sowie eine Vorrichtung zur Durchführung des Verfahrens.

Bei der Reinigung von Gewässeroberflächen von Verunreinigungen wie Öl od.dgl., z.B. nach Schiffsunfällen, wird der auf dem Gewässer schwimmende Ölfilm durch schwimmende Sperren eingegrenzt und durch ölaufsaugende Materialien gebunden. Anschließend wird die schwimmende Sperre eingeengt und somit das ölbeladene Material räumlich konzentriert, ausgetragen und entsorgt. Das Austragen erfolgt im allgemeinen in einem zeit- und arbeitsaufwendigen Vorgang mittels Lochschaufeln; zudem wird dabei ein nicht kontrollierbarer Wasseranteil mitausgeschöpft, der bei der anschließenden Entsorgung des als Sondermüll zu behandelnden Granulats hinderlich ist.

Aus CH-A-484 329 ist ein Verfahren gemäß dem Oberbegriff des Anspruchs 1 bekannt, bei dem von einem auf der Wasserfläche fahrenden Schiff aus das Granulat auf einen von zwei trichterförmig konvergierend angeordneten starren Abgrenzungen begrenzten Bereich der Wasseroberfläche vor dem Bug des Schiffes aufgebracht wird. Das ölbeladene Granulat wird durch die Fahrbewegung des Schiffes um die konvergierenden Abgrenzungen im Bugbereich des Schiffes konzentriert und dort von einem Siebband aufgenommen, welches das Wasser vom Granulat trennt und das Granulat auf dem Schiff ablegt. Dieses Verfahren setzt ein auf dem betreffenden Gewässer vorhandenes Wasserfahrzeug von beträchtlichen Abmessungen voraus und ist deshalb nicht überall dort, wo Ölunfälle gegebenenfalls auch auf kleinen Gewässern auftreten, einsetzbar.

Der Erfindung liegt die Aufgabe zugrunde, ein Verfahren der eingangs genannten Art, und eine Vorrichtung zu seiner Durchführung anzugeben, mit dem Gewässeroberflächen schnell und einfach von Verunreinigungen wie Öl od.dgl. gereinigt werden können, und welches mit mobilem Gerät durchgeführt werden kann und deshalb unabhängig von an dem betreffenden Gewässer bereits vorhandenen fahrbaren oder ortsfesten Installationen ist.

Diese Aufgabe wird erfindungsgemäß mit dem in Anspruch 1 angegebenen Verfahren bzw. mit der in Anspruch 6 angegebenen Vorrichtung gelöst. Die Verwendung einer flexiblen Abgrenzung zum fortschreitenden Einengen der Granulatschicht ermöglicht ein rationelles Aufnehmen des Granulats von der Wasseroberfläche, ohne daß hierdurch die Fahrbewegung eines Schiffes oder eine Strömung des Gewässers ausgenutzt zu werden braucht. Das Pumpen der abgezogenen Granulat-Wasser-Mischung zu einer entfernt angeordneten Trenneinrichtung ermöglicht die Verwendung von leicht transportablen Einheiten, die im Notfall zu jedem beliebigen Gewässer transportiert und an dessen Ufer aufgestellt werden können, so daß ein großes Wasserfahrzeug nicht erforderlich ist.

Zur Anwendung des Verfahrens ist es vorteilhaft, das Granulat vor einer Überlaufkante eines schwimmenden Behälters zu konzentrieren und die Mischung aus Wasser und Granulat über die Überlaufkante abzuziehen. Das in der Trenneinrichtung getrennte Wasser kann, da es möglicherweise noch Granulat enthalten kann, wieder in den Bereich innerhalb der schwimmenden Abgrenzung zurückgefördert werden, wobei die Förderung der Mischung über eine am Ufer des Gewässers oder auf einer in dem Gewässer schwimmenden Unterlage angeordneten Förderpumpe erfolgen kann.

Um den Transport und die Lagerung der Vorrichtung zur Anwendung des Verfahrens zu erleichtern, sind Einlaufbehälter, Förderpumpe und Trennvorrichtung jeweils als gesonderte, leicht transportier- und aufstellbare Einheiten ausgebildet und durch flexible Leitungen miteinander verbindbar. Zum Abziehen der Mischung kann dabei ein von Schwimmern getragener Einlaufbehälter mit einer tiefer als die Wasseroberfläche einstellbaren Überlaufkante verwendet werden.

Um eine schnelle und kontinuierlich ablaufende Trennung des Wasser-/Granulat-Gemisches sicherzustellen, eignet sich zur Durchführung des Verfahrens insbesondere eine Siebmaschine mit außen beaufschlagter Spaltsiebtrommel, auf die das Gemisch aufgebracht wird, so daß das Wasser nach dem Durchfließen der Trommel abgeführt und das Granulat von der Oberfläche der Trommel abgenommen und entsorgt werden können.

Die Siebtrommel und/oder ein Einlaufkasten für das Gemisch sind lösbar mit der Siebmaschine verbunden, und Zulauf und/oder Ablauf sind als Schlauchschnellkupplungen ausgebildet, so daß eine schnelle und einfache Montage der Siebmaschine gewährleistet ist.

Eine Ausführungsform der Erfindung wird anhand der beigefügten Zeichnungen erläutert. Es zeigen :
Fig. 1 eine Draufsicht auf eine Vorrichtung zum Entfernen von Öl von Gewässeroberflächen;
Fig. 2 eine Seitenansicht einer Siebmaschine, und
Fig. 3 eine Vorderansicht einer Siebmaschine.

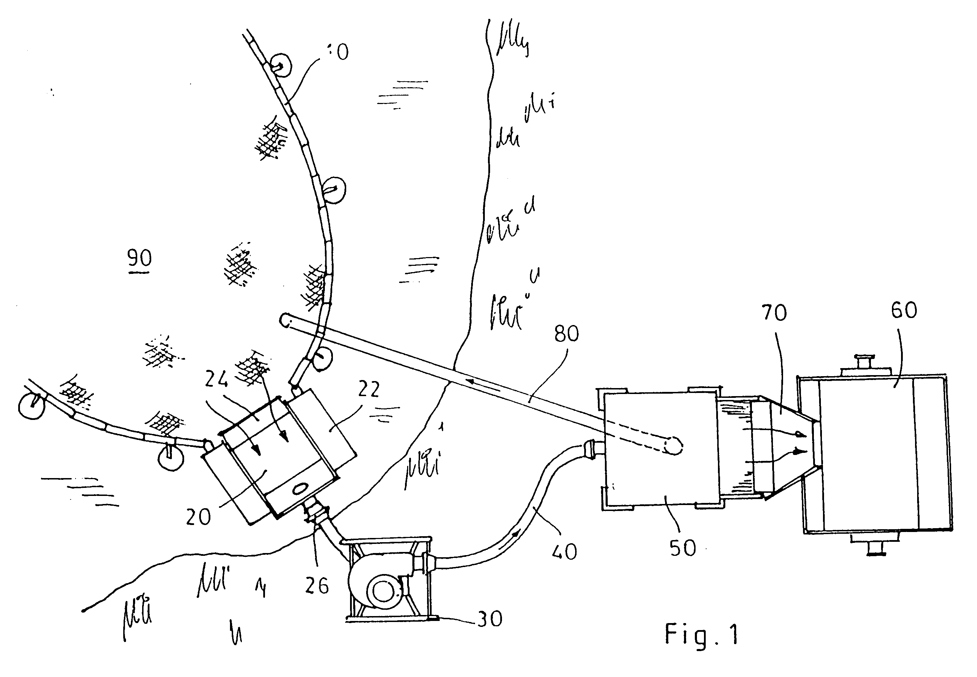

In Fig. 1 bezeichnet die Bezugsziffer 90 einen durch Öl oder andere Chemikalien verunreinigten Bereich einer Wasseroberfläche, der durch schwimmende Sperren 10 gegen die übrige Wasseroberfläche abgegrenzt ist, und in dem ein schwimmfähiges, ölaufsaugendes Granulat (nicht dargestellt) auf die Wasseroberfläche aufgebracht wurde. Die Sperren 10 sind mit einem Einlaufbehälter 20 so verbunden , daß sich eine geschlossene Abgrenzung der verunreinigten Wasseroberfläche ergibt. Der Einlaufbehälter 20 kann stationär in Ufernähe auf dem Gewässergrund aufgestellt sein, vorzugsweise ist er aber mittels Schwimmern 22 an der Wasseroberfläche schwimmend angeordnet. Der Einlauf des Einlaufbehälters ist als Überlaufkante 24 ausgebildet, die in eine gewünschte Tiefe unter der Wasseroberfläche eingestellt werden kann. Aufgrund der schwimmenden Anordnung des Einlaufbehälters 20 bleibt die Überlaufhöhe konstant, sodaß der Einlaufbehälter als Abzugsregler arbeitet. Durch fortschreitendes Verengen der schwimmenden , flexiblen Abgrenzung kann das Granulat zur Überlaufkante 24 des Einlaufbehälters hin gedrängt werden.

Das über die Überlaufkante 24 in den Einlaufbehälter 20 einströmende Wasser-Granulat-Gemisch wird aus den Einlaufbehälter 20 und über einen Ablauf 26, der als Schlauchschnellkupplung ausgebildet ist, von einer am Ufer aufgestellten Förderpumpe 30 abgezogen. Die Förderpumpe 30 ist vorzugsweise eine selbstansaugende Kanalradpumpe, die sich insbesondere für die Förderung von Fest/Flüssig-Gemischen eignet. Anders als in Fig. 1 dargestellt, können der Einlaufbehälter 20 und die Förderpumpe 30 als gemeinsame Einheit ausgebildet sein, die zusammen auf einer schwimmenden Unterlage angeordnet sind.

Über eine Schlauchleitung 40 gelangt das Gemisch dann in eine Trennvorrichtung 50, in der das ölbeladene Granulat von dem Wasser getrennt wird. Das so abgetrennte Granulat gelangt über ein Leitblech 70 in einen Sammelbehälter 60, in dem es gesammelt und anschließend der Entsorgung als Sondermüll zugeführt wird. Der Sammelbehälter 60 ist vorzugsweise als Container ausgebildet, der von einem Lastkraftwagen aufgenommen und transportiert werden kann.

Über eine Schlauchleitung 80 wird das aus der Mischung abgetrennte Wasser wieder dem Gewässer zugeführt, und zwar vorzugsweise wieder in den durch die Sperren 10 abgetrennten Bereich 90, da das abgetrennte Wasser noch Granulatreste enthalten kann.

Um eine möglichst vollständige Entfernung des Granulates aus dem Wasser sicherzustellen, kann zusätzlich noch ein Sieb im Leitungsweg der Schlauchleitung 80 oder am Ende der Schlauchleitung 80 im Bereich 90 vorgesehen werden. Das zusätzliche Sieb kann während des gesamten Betriebs der Anlage verwendet werden oder nur gegen Ende des Reinigungsvorganges, um die verbliebenen feinkörnigen Granulatreste zu entfernen.

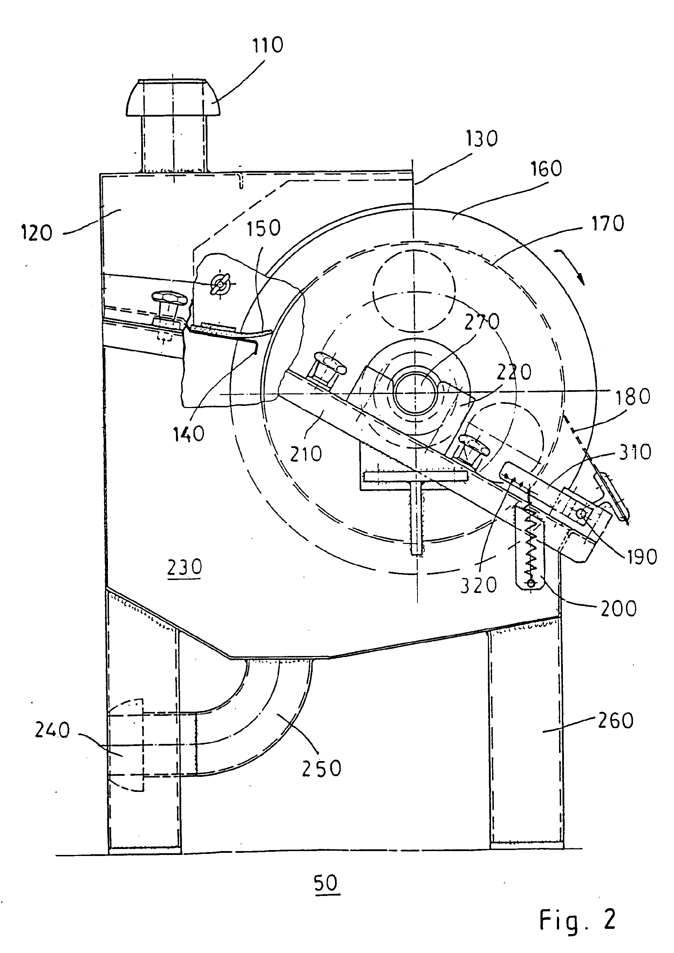

Eine bevorzugte Ausführungsform der Trennvorrichtung 50 ist die in Fig. 2 in Seitenansicht gezeigte Siebmaschine zur Trennung des Wasser-Granulat-Gemisches. Über einen Zulauf 110, der vorteilhafterweise als Schlauchschnellkupplung ausgebildet und mit der Schlauchleitung 40 verbunden ist, gelangt das Wasser-Granulat-Gemisch in einen Einlaufkasten 120. Der Einlaufkasten 120 ist oberhalb einer Spaltsiebtrommel 170 angeordnet und an seiner Unterkante 140 über eine elastische Leiste 150 gegen den Trommelumfang abgedichtet. Unterhalb der Spaltsiebtrommel 170 und des Einlaufkastens 120 ist ein Ablaufkasten 230 vorgesehen, dessen Ablauf eine Rohrleitung 250 mit einer Schlauchschnellkupplung 240 bildet. Der Boden des Ablaufkastens ist so ausgebildet, daß seine Verbindung mit der Rohrleitung 250 den tiefsten Punkt bildet, so daß Wasser aus dem Ablaufkasten 230 vollständig abgeführt werden kann.

Das Wasser des Wasser-Granulat-Gemisches wird im Bereich des Einlaufkastens 120 von der Spaltsiebtrommel 170 abgetrennt und gelangt über den Trommelinnenraum in den Ablaufkasten 230, aus dem es über die Rohrleitung 250 und den damit verbindbaren Schlauch 80 wieder in das Gewässer geleitet wird. Das sich auf der Oberfläche der Spaltsiebtrommel 170 ansammelnde Granulat wird durch die sich drehende Spaltsiebtrommel 170 mitgenommen und durch eine Öffnung 130 des Einlaufkastens 120 aus diesem ausgetragen. An einer Abstreifleiste 180 wird das an der Oberfläche der Spaltsiebtrommel 170 anhaftende Granulat abgestreift und über ein Leitblech od.dgl. dem Sammelbehälter zugeführt. Die Abstreifleiste 180 ist schwenkbar an einem Drehbolzen 190 gelagert und über eine Feder 200 in Richtung auf die Trommeloberfläche vorgespannt. Die Feder 200 ist als Zugfeder ausgebildet und einerseits am Gehäuse der Siebmaschine befestigt, andererseits an einem mit der Abstreifleiste 180 verbundenen Hebelarm 310. Der Hebelarm 310 weist verschiedene Angriffspunkte für die Feder auf, so daß die Federstellung verändert und der Anpreßdruck der Abstreifleiste 180 eingestellt werden kann.

Die gesamte Siebmaschine befindet sich in einem äußeren Gehäuse und wird von Füßen 260 abgestützt, die ihrerseits Konsolen 210 tragen. Auf den Konsolen 210 sind nach oben offene Lager 220 für die Welle 270 der Spaltsiebtrommel vorgesehen. Durch die Ausgestaltung der Lager 220 als Halblager kann die Trommel in einfacher Weise für den Transport oder die Reinigung aus der Siebmaschine entfernt werden, nachdem der lösbare Zulaufkasten nach oben abgenommen wurde. Die Lager 220 sowie die Welle 270 werden oben durch seitlich abnehmbare Trommelschutzbleche 160 geschlossen, die als Spritzschutz für die außenliegenden Trommellager dienen.

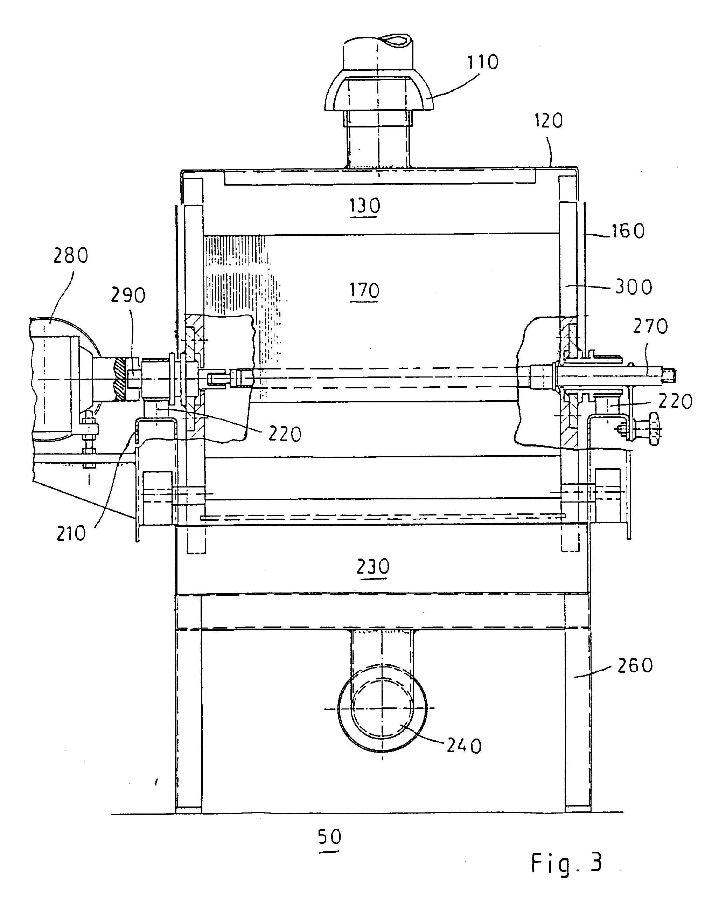

In Fig. 3 ist die Siebmaschine gemäß Fig. 2 in Vorderansicht dargestellt. Aus Fig. 3 ist ersichtlich, daß die Siebspalttrommel 170 an jeder Stirnseite eine Stirnscheibe 300 aufweist, die in radialer Richtung als Flansch über die Oberfläche der Spaltsiebtrommel übersteht, so daß weder Granulat noch Wasser seitlich von der Trommeloberfläche abfließen kann. Die seitlichen Wandungen des Wasserablaufkastens übergreifen die Stirnscheiben 300 an deren Innenseite.

Die in den Lagern 220 gelagerte Welle 270 der Spaltsiebtrommel 170 weist zumindest an einem Ende eine Kupplung 290 auf, mit der sie an eine Antriebseinheit 280 angeschlossen werden kann. Die Antriebseinheit 280 kann aus einem Elektromotor, einem Verbrennungsmotor od.dgl. bestehen; der Antrieb der Trommel kann auch über eine Zapfwelle eines Kraftfahrzeuges oder mittels einer an der Kupplung 290 angesetzten Handkurbel erfolgen. Die Kupplung 290 ist vorzugsweise als beidseitig offene Klauenkupplung ausgebildet.

Die oben beschriebene Siebmaschine kann leicht transportiert werden, da der Zulaufkasten 120 und die Spaltsiebtrommel 170 lösbar befestigt sind und die Schlauchanschlüsse als Schnellkupplungen ausgebildet sind. Die Wartungsarbeiten für die Siebmaschine sind relativ gering, da durch das Wasser, das durch die gesamte Siebtrommel hindurchtritt, eine Selbstreinigung der Siebtrommel bewirkt wird. Da die Siebmaschine kontinuierlich betrieben werden kann, fallen keine Wartezeiten für das Beschicken der Maschine oder das Abführen von Granulat an, so daß ein fortlaufender schneller Betrieb gewährleistet ist.

Abweichend von der beschriebenen Ausführungsform können die Förderpumpe 30 und die Trenneinrichtung 50 auch z.B. gemeinsam auf einem Landfahrzeug, z.B. einem Fahrzeug für Katastropheneinsatz, oder auf einem das jeweilige Gewässer befahrenden Wasserfahrzeug oder einer schwimmenden Plattform angeordnet sein.

## Patentansprüche

1. Verfahren zum Entfernen von öl von der Oberfläche eines Gewässers, bei dem ein schwimmfähiges, ölaufsaugendes Granulat auf die Wasseroberfläche aufgebracht und ölbeladenes Granulat von der Wasseroberfläche abgezogen und mittels einer Trenneinrichtung vom Wasser getrennt wird, dadurch **gekennzeichnet,** daß das an der Wasseroberfläche schwimmende Granulat mit einer Schwimmenden, flexiblen Abgrenzung (10) umgeben und durch fortschreitendes Verengen der Abgrenzung in einem Bereich (90) der Wasseroberfläche konzentriert wird, daß aus dem Bereich (90) eine pumpfähige Mischung von Wasser und Granulat abgezogen wird, und daß die abgezogene Mischung zu der entfernt von der Abzugsstelle angeordneten Trenneinrichtung (50) gepumpt und in dieser vom Wasser getrennt wird.

2. Verfahren nach Anspruch 1 , dadurch **gekennzeichnet ,** daß man die in dem Bereich (90) konzentrierte Mischung aus Wasser und Granulat über eine Überlaufkante (24) in einen an der Wasseroberfläche insbesondere schwimmend angeordneten Behälter (20) einlaufen läßt und aus dem Behälter (20) zur Trenneinrichtung (50) fördert.

3. Verfahren nach Anspruch 1 oder 2 , dadurch **gekennzeichnet,** daß man das in der Trenneinrichtung (50) abgetrennte Wasser in das Gewässer, insbesondere in den Bereich (90) innerhalb der schwimmenden Abgrenzung (10), zurückfördert.

4. Verfahren nach einem der Ansprüche 1 bis 3 , dadurch **gekennzeichnet,** daß man mindestens die Trenneinrichtung (90), gegebenenfalls auch eine Förderpumpe (30) zum Fördern des Gemisches zur Trenneinrichtung (50), am Ufer des Gewässers oder auf einer in dem Gewässer schwimmenden Unterlage anordnet.

5. Vorrichtung zur Durchführung des Verfahrens nach einem der Ansprüche 1 bis 4, mit einem insbesondere von Schwimmern getragenen, in das Gewässer einsetzbaren Einlaufbehälter (20) mit einer tiefer als die Wasseroberfläche einstellbaren Überlaufkante (24), und einer Trennvorrichtung (50) zum Abtrennen des in den Einlaufbehälter gelangenden Granulats vom Wasser, dadurch **gekennzeichnet,** daß der Einlaufbehälter (22) mit einer flexiblen, einengbaren, auf der Wasseroberfläche schwimmenden Abgrenzung verbunden ist, und daß der Einlaufbehälter (20), die Trennvorrichtung (50) und eine das Granulat-Wasser-Gemisch vom Einlaufbehälter (20) zur Trenneinrichtung (50) fördernde Förderpumpe (30) jeweils als gesonderte, leicht transportier- und aufstellbare Einheiten ausgebildet und durch flexible Leitungen (40, 80) miteinander verbindbar sind.

6. Vorrichtung nach Anspruch 5, dadurch **gekennzeichnet,** daß die Trenneinrichtung (50) als Siebmaschine, insbesondere mit einer Spaltsiebtrommel (170), ausgebildet ist.

7. Vorrichtung nach Anspruch 6, dadurch **gekennzeichnet,** daß die Siebmaschine eine außenbeaufschlagte Spaltsiebtrommel (170), einen Einlaufkasten (120) zur Zuführung der Mischung von Granulat und Wasser auf die Auffenseite der Trommel (170), und eine federnd anliegende Abstreifleiste (180) zum Abstreifen von an der Trommel (170) anhaftenden Granulat aufweist.

8. Vorrichtung nach Anspruch 7, dadurch **gekennzeichnet,** daß der Einlaufkasten (120) und/oder die Spaltsiebtrommel (170) lösbar mit der Siebmaschine verbindbar sind.

9. Vorrichtung nach einem der Ansprüche 7 oder 8, dadurch **gekennzeichnet,** daß die Spaltsiebtrommel (170) in nach oben offenen Lagern (220) gelagert ist.

10. Vorrichtung nach einem der Ansprüche 7 bis 9, dadurch **gekennzeichnet,** daß die Abstreifleiste (180) federbelastet und schwenkbar gelagert ist.

11. Vorrichtung nach einem der Ansprüche 7 bis 10, dadurch **gekennzeichnet,** daß unterhalb der Spaltsiebtrommel (170) ein Ablaufkasten (230) angeordnet ist.

12. Vorrichtung nach einem der Ansprüche 7 bis 11, dadurch **gekennzeichnet,** daß der Zulauf und/oder Ablaufkasten (120, 230) Schlauchschnellkupplungen (110, 240) aufweisen.

13. Vorrichtung nach einem der Ansprüche 7 bis 12, dadurch **gekennzeichnet,** daß eine Antriebseinrichtung (280) über eine beidseitig offene Klauenkupplung (290) mit der Siebtrommelwelle (270) verbindbar ist.

14. Vorrichtung nach Anspruch 9, dadurch **gekennzeichnet,** daß die Lager (220) nach oben durch seitlich der Trommel angeordnete Spritzschutzbleche (160) geschlossen sind.

## Claims

1. A method of removing oil from the surface of inland waters, in which a floating, oil-absorbing granular material is applied to the surface of the water and oil-laden granular material is removed from the surface of the water and is separated from the water by means of a separating device, characterised in that the granular material floating on the surface of the water is surrounded by a floating, flexible barrier (10) and is concentrated by progressively contracting the barrier into a zone (90) of the surface of the water, in that a pumpable mixture of water and granular material is removed from the zone (90), and in that the mixture removed is pumped to the separating device (50) which is situated remote from the removal location and in which it is separated from the water.

2. A method according to Claim 1, characterised in that the mixture of water and granular material concentrated in the zone (90) is allowed to flow over an overflow lip (24) into a vessel (20) in particular arranged to float on the surface of the water and is fed from the vessel (20) to the separating device (50).

3. A method according to Claim 1 or 2, characterised in that the water separated in the separating device (50) is returned to the water, particularly into the zone (90) within the floating barrier (10).

4. A method according to any one of Claims 1 to 3, characterised in that at least the separating device (50), optionally also a feed pump (30) for feeding the mixture to the separating device (50), is disposed on the bank of the inland water or on a support floating in the water.

5. An apparatus for carrying out the method according to any one of Claims 1 to 4, with an inlet vessel (20) which can be placed in the water and which, in particular, is supported by floats, said inlet vessel having an overflow lip (24) which can be set lower than the surface of the water and a separating device (50) for separating the granular material entering the inlet vessel from water, characterised in that the inlet vessel (20) is connected to a flexible, contractable barrier floating on the surface of the water, and in that the inlet vessel (20), the separating device (50) and a feed pump (30) feeding the granular material-water mixture from the inlet vessel (20) to the separating device (50) each take the form of separate units which can be readily transported and set up, and which can be connected to one another by flexible conduits (40, 80).

6. An apparatus according to Claim 5, characterised in that the separating device (50) is in the form of a sieving machine, in particular with a split sieve drum (170).

7. An apparatus according to Claim 6, characterised in that the sieving machine has a split sieve drum (170) acted upon from the outside, an inlet box (120) for feeding the mixture of granular material and water to the outside of the drum (170), and a resiliently applied scraper strip (180) for scraping off any granular material adhering to the drum (170).

8. An apparatus according to Claim 7, characterised in that the inlet box (120) and/or the split sieve drum (170) are releasably connected to the sieving machine.

9. An apparatus according to one of Claims 7 or 8, characterised in that the split sieve drum (170) is mounted in upwardly open mountings (220).

10. An apparatus according to any one of Claims 7 to 9, characterised in that the scraper strip (180) is spring-loaded and pivotably mounted.

11. An apparatus according to any one of Claims 7 to 10, characterised in that an outlet box (230) is disposed below the split sieve drum (170).

12. An apparatus according to any one of Claims 7 to 11, characterised in that the inlet and/or outlet boxes (120, 230) have quick-action hose couplings (110, 240).

13. An apparatus according to any one of Claims 7 to 12, characterised in that a drive means (280) can be connected with the sieve drum shaft (270) via a claw coupling (290) open at both ends.

14. An apparatus according to Claim 9, characterised in that the mountings (220) are closed upwardly by splash guards (160) arranged laterally of the drum.

## Revendications

1. Procédé pour éliminer des huiles de la surface d'étendues d'eau, selon lequel un granulat susceptible de flotter, absorbant l'huile, est amené sur la surface de l'eau, et selon lequel le granulat chargé en huile est retiré de la surface de l'eau et est séparé de l'eau au moyen d'un dispositif séparateur, caractérisé en ce que le granulat flottant sur la surface de l'eau est entouré par un élément de délimitation (10) flexible et flottant, et est concentré en une zone (90) de la surface de l'eau par rétrécissement progressif de l'élément de délimitation, en ce qu'un mélange d'eau et de granulat, susceptible d'être pompé, est prélevé de la zone (90), et en ce que le mélange prélevé est amené par pompage au dispositif séparateur (50) disposé à l'écart de la zone de prélèvement, et y est séparé de l'eau.

2. Procédé selon la revendication 1, caractérisé en ce que l'on laisse s'écouler le mélange d'eau et de granulat concentré dans la zone (90), par-dessus un bord-déversoir (24), dans un réservoir (20) disposé sur la surface de l'eau, notamment de manière flottante, et en ce que l'on transporte ce mélange du réservoir (20) au dispositif séparateur (50).

3. Procédé selon la revendication 1 ou 2, caractérisé en ce que l'on ramène dans l'étendue d'eau, notamment dans la zone (90) à l'intérieur de l'élément de délimitation (10) flottant, l'eau séparée dans le dispositif séparateur (50).

4. Procédé selon l'une des revendications 1 à 3, caractérisé en ce que l'on dispose au moins le dispositif séparateur (50), le cas échéant également une pompe de refoulement (30) pour transporter le mélange au dispositif séparateur (50), sur la berge de l'étendue d'eau ou sur une base de support flottant sur l'étendue d'eau.

5. Dispositif pour la mise en oeuvre du procédé selon l'une des revendications 1 à 4, comportant un réservoir de déversement (20) pouvant être mis en place dans l'étendue d'eau, notamment porté par des flotteurs, et présentant un bord-déversoir (24) susceptible d'être réglé plus bas que la surface de l'eau, et comportant également un dispositif séparateur (50) pour séparer de l'eau le granulat pénétrant dans le réservoir de déversement, caractérisé en ce que le réservoir de déversement (20) est relié à un élément de délimitation flexible pouvant être rétréci et flottant à la surface de l'eau, et en ce que le réservoir de déversement (20), le dispositif séparateur (50) et une pompe de refoulement (30) transportant le mélange granulat-eau du réservoir de déversement (20) au dispositif séparateur (50), sont constitués chacun en tant qu'unité individuelle, peuvent être aisément transportés et montés, et peuvent être reliés les uns aux autres par l'intermédiaire de conduites flexibles (40, 80).

6. Dispositif selon la revendication 5, caractérisé en ce que le dispositif séparateur (50) est réalisé sous la forme d'une machine à tamiser, comportant notamment un tambour à tamiser à fentes (170).

7. Dispositif selon la revendication 6, caractérisé en ce que la machine à tamiser comprend un tambour à tamiser à fentes (170) sollicité extérieurement, un caisson d'alimentation (120) pour l'amenée du mélange de granulat et d'eau sur le côté extérieur du tambour (170), et un racleur (180) en appui élastique, pour racler les granulats qui adhèrent sur le tambour (170).

8. Dispositif selon la revendication 7, caractérisé en ce que le caisson d'alimentation (120) et/ou le tambour à tamiser à fentes (170) peuvent être reliés de manière démontable à la machine à tamiser.

9. Dispositif selon l'une des revendications 7 ou 8, caractérisé en ce que le tambour à tamiser à fentes (170) est monté dans des paliers (220) ouverts vers le haut.

10. Dispositif selon l'une des revendications 7 à 9, caractérisé en ce que le racleur (180) est sollicité par ressort et est monté pivotant.

11. Dispositif selon l'une des revendications 7 à 10, caractérisé en ce que sous le tambour à tamiser à fentes (170) est disposé un caisson d'évacuation (230).

12. Dispositif selon l'une des revendications 7 à 11, caractérisé en ce que le caisson d'alimentation (120) et/ou le caisson d'évacuation (230) comportent des raccords rapides de tuyaux (110, 240).

13. Dispositif selon l'une des revendications 7 à 12, caractérisé en ce qu'un système d'entraînement (280) peut être relié à l'arbre de tambour à tamiser (270), par l'intermédiaire d'un accouplement à crabots (290) ouvert des deux côtés.

14. Dispositif selon la revendication 9, caractérisé en ce que les paliers (220) sont fermés vers le haut par des tôles de protection des projections (160), disposées latéralement au tambour.
